**Europäisches Patentamt**

**European Patent Office**

**Office européen des brevets**

(11) Veröffentlichungsnummer: **0 157 312**
**A2**

# EUROPÄISCHE PATENTANMELDUNG

(21) Anmeldenummer: **85103394.4**

(22) Anmeldetag: **22.03.85**

(51) Int. Cl.⁴: **G 03 B 27/58**

(30) Priorität: **03.04.84 DE 3412413**

(43) Veröffentlichungstag der Anmeldung: **09.10.85**
**Patentblatt 85/41**

(84) Benannte Vertragsstaaten: **CH DE GB LI NL**

(71) Anmelder: **METEOR-SIEGEN Apparatebau Paul Schmeck GmbH, Frankfürter Strasse 27, D-5900 Siegen (DE)**

(72) Erfinder: **Sobotta, Reinhard, Rinsdorfer Strasse 9, D-5900 Siegen-Eisern (DE)**
Erfinder: **Isermann, Heinz, Mozartstrasse 41, D-5900 Siegen (DE)**

(74) Vertreter: **Eisenführ & Speiser, Martinistrasse 24, D-2800 Bremen 1 (DE)**

(54) **Tastenfeld für eine Kopiermaschine.**

(57) Es wird ein Tastenfeld für eine Kopiermaschine angegeben, das zur erleichterten und fehlerfreien Eingabe der Längen der Vorlagenränder je eine Leuchtbandanzeige für den vorderen und für den hinteren Vorlagenrand enthält. Der optische Anzeigewert der Leuchtbandanzeigen lässt sich von hierfür vorgesehene Vorlagerand-Tasten gleich der Länge der Vorlagenränder einstellen, wobei jeweils ein dem eingestellten optischen Anzeigewert entsprechender Digitalwert zur Eingabe in Steuereinrichtungen erzeugt und verfügbar gehalten wird.

EP 0 157 312 A2

- 1 -

# B e s c h r e i b u n g

Die Erfindung betrifft ein Tastenfeld für eine Kopiermaschine, welche die Kopierblätter entsprechend der
Grösse der jeweiligen Vorlage von einer Materialbahn
abschneidet, mit Kopienrand-Tasten zur Eingabe der
Länge $PR_V$, $PR_H$ der vorderen und hinteren Kopienränder
und Vorlagerand-Tasten zur Eingabe der Länge $OR_V$, $OR_H$
der vorderen und hinteren Vorlagenränder in eine
Steuereinrichtung, welche die Vorderkante und die
Rückkante der Vorlage während ihres Vorschubes abtastet und in Abhängigkeit von den Längen $PR_V$, $PR_H$,
$OR_V$, $OR_H$ Steuerimpulse zur Steuerung des Materialbahn-
Vorschubs und der Schneideinrichtung erzeugt.

Eine Vorrichtung mit einem derartigen Tastenfeld ist
aus der DE-OS 31 43 112 bekannt, die zum Abtrennen
eines Materialblattes von einer Materialbahn in Abhängigkeit von der Grösse einer Vorlage dient. Bei dieser bekannten Vorrichtung wird die Länge des vorderen und/oder
hinteren Vorlagenrands sowie die Länge des gewünschten
vorderen und/oder hinteren Kopierblattrandes eingegeben
und gespeichert. Die Steuereinrichtung enthält eine Abtasteinrichtung zum Abtasten der vorderen und hinteren
Kante der Vorlage in vorgegebenem Abstand A in Vorschubrichtung vor der Trenneinrichtung. Steuerimpulse werden
abgegeben, wenn die Vorder- oder Hinterkante der Vorlage
von der Abtasteinrichtung die Strecke $A \pm (PR - OR)_{V, H}$
zurückgelegt hat. Mit dem von der vorderen Vorlagenkante
ausgelösten Steuerimpuls wird der Vorschub der Materialbahn gestartet, mit dem von der hinteren Vorlagenkante ausgelösten Steuerimpuls wird die Schneideinrichtung
zum Abschneiden des Kopierblattes betätigt. Das Kopierblatt besitzt dadurch gegenüber dem beschnittenen Maß
der Vorlage, von dem aus sich die Randlängen ganz allgemein bemessen, die gewünschten Randlängen. Nachteilig
bei dieser bekannten Vorrichtung und dem hierfür bekannten Tastenfeld ist es, dass zur Eingabe der Längen
der vorderen und hinteren Vorlagenränder diese Längen
gemessen und anschliessend eingetastet oder mittels
anderer Eingabeorgane eingegeben werden müssen. Da der
Messvorgang und der nachfolgende Eingabevorgang jeweils
in der national gültigen Maßeinheit erfolgt, sind für
den Export der Vorrichtung in Länder mit nicht metrischem
Maßsystem jeweils noch Umrechnungsschaltungen notwendig,
welche die eingegebenen Randlängen in dasjenige Maßsystem
umrechnen, in welchem der vorgegebene Abstand A vorgegeben ist.

Aufgabe der Erfindung ist es daher, ein Tastenfeld der
eingangs genannten Art derart weiterzubilden, dass die
Eingabe der Länge der Vorlagenränder ohne separaten
Messvorgang in einfacher Weise zuverlässig möglich ist.

Diese Aufgabe wird erfindungsgemäss dadurch gelöst, dass
zur Eingabe der Längen der Vorlagenränder je eine Leuchtbandanzeige vorgesehen ist, deren optischer Anzeigewert
von den Vorlagerand-Tasten gleich der Länge der Vorlagenränder einstellbar ist, und die einen dem eingestellten
Anzeigewert entsprechenden Digitalwert zur Eingabe in
die Steuereinrichtung erzeugen.

Die Vorteile der Erfindung liegen insbesondere darin,
dass die Beschneidungslinie der Vorlage über eine Nullpunkt-Markierung zur Deckung gebracht wird, und dass dann die Leuchtbandanzeige mittels der Vorlagerand-
Tasten solange ausgesteuert wird, bis der optische
Anzeigewert bzw. die eingestellte analoge Anzeigelänge mit der Kante der Vorlage zusammenfällt. Die
Leuchtbandanzeige erzeugt dabei einen dem analogen
Anzeigewert entsprechenden Digitalwert, der die
Länge des angelegten Vorlagenrandes kennzeichnet und
in die Steuereinrichtung eingegeben bzw. eingespeichert
wird. Vorteilhafterweise wird also die betreffende
Randlänge als Anzeigelänge oder Anzeigewert der Leuchtbandanzeige simuliert, und es wird bei dieser Simulation
automatisch ein Digitalwert erzeugt, der zur weiteren
Verarbeitung zur Verfügung steht. Auf diese Weise wird
ein separater Messvorgang und die digitale Eingabe des
Messwertes in einer speziellen Maßeinheit sowie ggfs.
die Umrechnung des eingegebenen Wertes in eine andere
Maßeinheit vermieden, und die Fehler bei der Eingabe
werden verringert.

Gemäss einer bevorzugten Ausführungsform der Erfindung
ist für jede Leuchtbandanzeige eine erste Vorlagerand-
Taste zur Erhöhung des Anzeigewertes, und eine zweite
Vorlagerand-Taste zur Verringerung des Anzeigewertes
vorgesehen. Die Vorlagerand-Tasten sind bevorzugt als
Tastenschalter ausgebildet, bei deren Druckbeaufschlagung sich der Anzeigewert der Leuchtbandanzeigen
kontinuierlich, z.B.      zeitproportional, ändert.
Sobald die Tastenschalter entlastet werden, bleibt der
dann eingestellte Anzeigewert erhalten. Auf diese Weise
ist die Anzeigelänge der Leuchtbandanzeige leicht in
Deckung mit der Länge des zur Anlage gebrachten Randes
der Vorlage einstellbar.

Bevorzugt bestehen die Leuchtbandanzeigen aus einer
geradlinig in einer Reihe nebeneinander angeordneter
diskreter Leuchtdioden, die voneinander einen vorgegebenen, konstanten Abstand besitzen und während der
Betätigung der Tastenschalter sequentiell z.B. über
einen Zähler adressiert und ausgesteuert werden, wobei der Adressenzähler dann gleichzeitig den korrespondierenden Digitalwert verfügbar hält.

Gemäss einer bevorzugten Ausführungsform der Erfindung
lassen sich mittels der Kopienrand-Tasten programmierbare/programmierte Festwerte eingeben. Bevorzugt sind
ferner Zusatztasten vorgesehen, bei deren Betätigung
die Leuchtbandanzeigen vorgegebene Festwerte für die
vordere und/oder hintere Randlänge der Vorlage in die
Steuereinrichtung eingeben und bevorzugt auch an der
Leuchtbandanzeige anzeigen.

Vorteilhafte Weiterbildungen der Erfindung sind durch
die Ansprüche gekennzeichnet.

Im folgenden wird eine Ausführungsform der Erfindung
anhand der Zeichnung näher erläutert. Es zeigen:

Fig. 1 eine Aufsicht auf eine Vorlage mit darunter
       liegendem Kopierblatt;

Fig. 2 ein schematisches Blockschaltbild einer Vorrichtung, in welcher das erfindungsgemässe
       Tastenfeld Verwendung findet; und

Fig. 3 eine Aufsicht auf das erfindungsgemässe Tasten-
       feld.

0157312

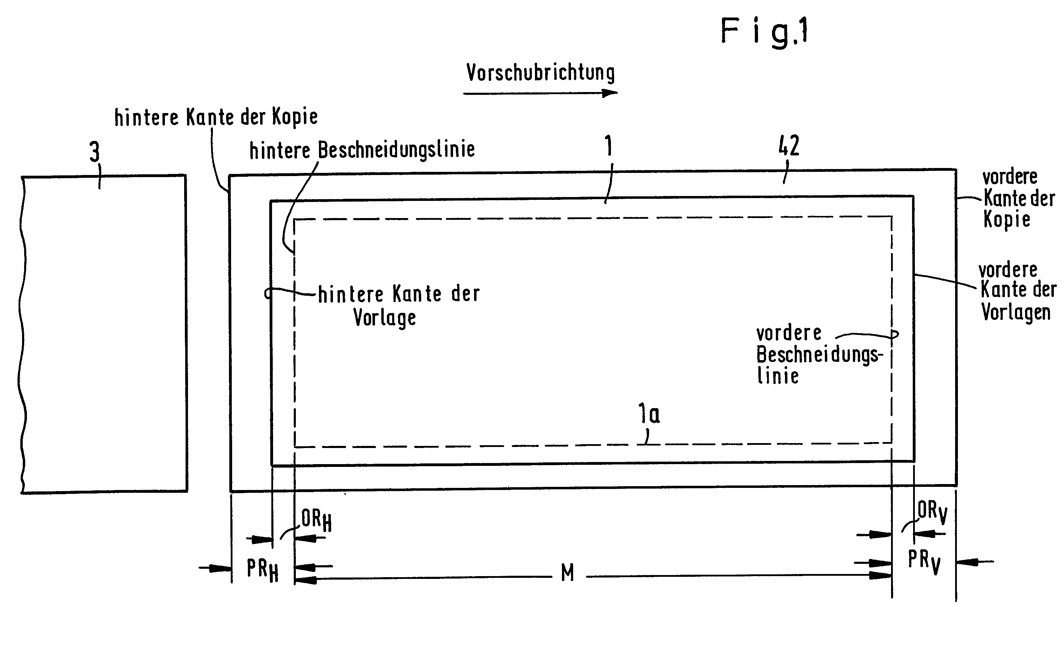

Fig. 1 zeigt eine Aufsicht auf eine Vorlage 1 mit darunter liegendem Kopierblatt 42. Eingetragen ist das beschnittene Maß M, d.h. die zum Zeichnen tatsächlich vorhandene Nettofläche auf der Vorlage 1, sowie die Länge $OR_V$, $OR_H$ des vorderen und hinteren Vorlagenrandes, ausserdem noch die Länge $PR_V$, $PR_H$ des vorderen und hinteren Kopierblatt-Randes. Die Längen $OR_V$, $OR_H$ bemessen sich von der vorderen bzw. hinteren Beschneidungslinie bis zur vorderen bzw. hinteren Vorlagenkante. Die Längen $PR_V$, $PR_H$ bemessen sich von der vorderen bzw. hinteren Beschneidungslinie zur vorderen bzw. hinteren Kopierblatt-Kante.

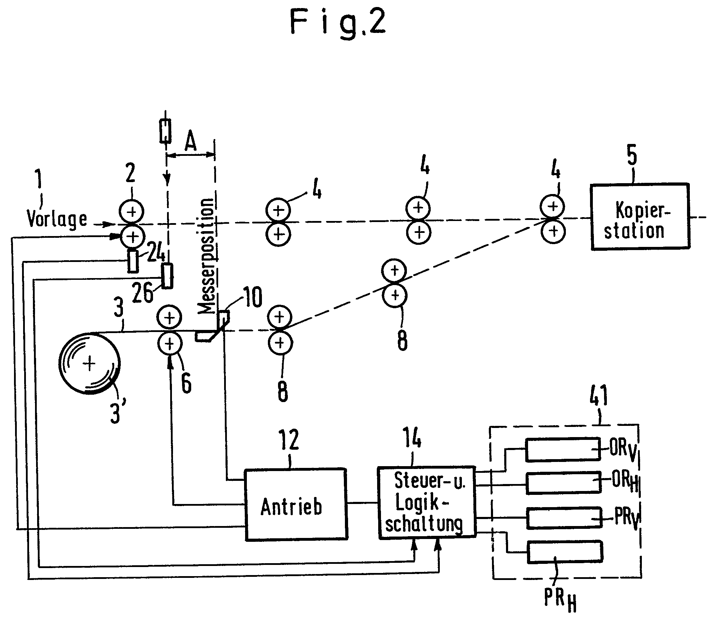

Fig. 2 zeigt eine schematische Darstellung mehrerer Walzenpaare 2, 4, die zusammen einen Vorschub für eine Vorlage 1 zu einer Kopierstation 5 hin bilden. Weitere Walzenpaare 6, 8 sind Teil des Vorschubs für eine Materialbahn 3, die von einem ersten Walzenpaar 6 von einer Vorratsrolle 3' abgezogen, durch eine Abtrenneinrichtung 10 hindurch schliesslich über die Walzenpaare 8, 4 zur Kopierstation 5 gefördert wird. Die von der Materialbahn 3 abgeschnittenen Teile laufen als Kopierblatt in Register mit der Vorlage durch die Kopierstation 5. Ein Antrieb 12 treibt, von einer Steuer- und Logikschaltung 14 gesteuert, die Walzenpaare 2, 4, 6, 8 und die Abtrenneinrichtung 10 an.

Die Steuer- und Logikschaltung 14 enthält einen Speicher (nicht dargestellt) zur Speicherung eingegebener und zu verarbeitender Daten. An die Steuer- und Logikschaltung ist ein Tastenfeld 41 zur Eingabe der Längen $OR_V$, $OR_H$, $PR_V$, $PR_H$ sowie möglicher anderer Steuerdaten angeschlossen. Die Steuer- und Logikschaltung 14 ist mit einer Sensoreinrichtung 26, z.B. einer Leuchtdioden-Sensorstrecke verbunden, die eine vorgegebene Strecke
A in Vorschubrichtung vor der Abtrenneinrichtung 10
in der Bahn der Vorlagen-Zufuhr liegt. Die Steuer-
und Logikschaltung 14 ist ferner mit einem Impulsgeber
24 verbunden, der am ersten Walzenpaar 2 der Vorlagen-
Zufuhr angeordnet ist und eine der Vorschubstrecke der
Vorlage proportionale Anzahl an Impulsen an die Steuer-
und Logikschaltung 14 abgibt.

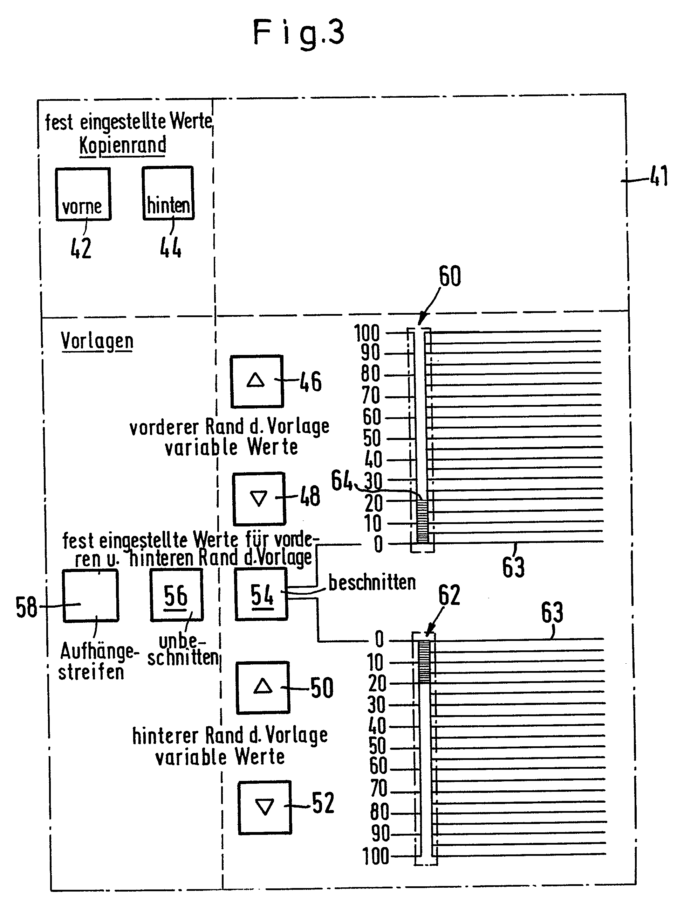

In der Steuer- und Logikschaltung 14 ist ausserdem der
Abstand A zwischen Sensoreinrichtung 26 und Abtrenneinrichtung 10 gespeichert. Die Eingabe der Längen $OR_V$,
$OR_H$, d.h. der Längen des hinteren und vorderen Vorlagenrandes, erfolgt mittels des erfindungsgemässen Tastenfeldes 41, vgl. Fig. 3.

Die Steuer- und Logikschaltung 14 berechnet die Strecke
$(A - PR_V + OR_V)$, welche die vordere Kante der Vorlage
nach dem Passieren der Sensoreinrichtung 26 noch mit
der Vorschubgeschwindigkeit zurücklegt, bevor der Vorschub der Materialbahn 3 mit derselben Geschwindigkeit
durch einen von der Steuer- und Logikschaltung 14 abgegebenen Steuerimpuls startet. Der vordere Rand der Materialbahn besitzt dann - gemessen von der vorderen Beschneidungslinie - die gewünschte Länge $PR_V$.

Soll auch der hintere Rand des Kopierblatts den gewünschten Wert $PR_H$ aufweisen, so berechnet die Steuer- und
Logikschaltung 14 die Strecke $(A + PR_H - OR_H)$ und gibt
einen Steuerimpuls ab, wenn die hintere Vorlagenkante
nach dem Passieren der Sensoreinrichtung 26 diese berechnete Strecke zurückgelegt hat. Dann besitzt der
hintere Rand des Kopierblatts die gewünschte Länge $PR_H$,
gemessen von der hinteren Beschneidungslinie. Die vom Benutzer eingegebenen Längen sowie die von der Steuer-
und Logikschaltung 14 berechnete Strecke (A $\pm$ (PR$_{V, H}$
- OR$_{V, H}$)) stellen Längen dar, welche von der Steuer-
und Logikschaltung 14 in entsprechende Zeitintervalle
umgesetzt werden, so dass die Steuerimpulse nach entsprechenden Zeitintervallen erscheinen, in denen die
vordere bzw. hintere Kante der Vorlage eine entsprechende Strecke zurückgelegt hat. Eine einfache Möglichkeit,
zurückgelegte Wegstrecken in Zeitintervalle umzusetzen,
stellt ein Impulsdrehgeber 24 dar, der am ersten Walzenpaar 2 des Vorlagen-Vorschubs angebracht ist, und dessen
abgegebene Anzahl an Impulsen der zurückgelegten Wegstrecke der Vorlage entspricht. Die vom Benutzer eingegebenen Werte OR$_{V, H}$ sowie PR$_{V, H}$ sowie der gegebene
Abstand A werden dann als Zahlenwerte eingegeben, die
im Umsetzungsmaßstab des Impulsgebers 24 den betreffenden Längen entsprechen.

Fig. 3 zeigt eine Aufsicht auf das erfindungsgemässe
Tastenfeld. Das Tastenfeld 41 besitzt eine erste Kopienrand-Taste 42 zur Eingabe eines fest eingestellten oder
einprogrammierten/einprogrammierbaren Festwertes für
die vordere Randlänge PR$_V$ des Kopierblattes. Eine zweite Kopienrand-Taste 44 dient zur Eingabe fest eingestellter oder programmierter/programmierbarer Festwerte
für die hintere Randlänge PR$_H$ des Kopierblattes. Gewünschtenfalls lassen sich für verschiedene Festwerte
mehrere erste Kopienrand-Tasten 42 und mehrere zweite
Kopienrand-Tasten 44 vorsehen.

Zur Einstellung der Längen OR$_V$, OR$_H$ der vorderen bzw.
hinteren Vorlagenränder sind je eine Leuchtbandanzeige
60, 62 vorgesehen, die jeweils aus einer Reihe geradlinig nebeneinander angeordneter diskreter Leuchtdioden 24 ausgebildet sind. Die Leuchtbandanzeigen 60, 62 besitzen je eine Nullpunkt-Markierung 63 in Form einer Geraden. Der optische Anzeigewert bzw. die optische Anzeigelänge der Leuchtbandanzeigen 60, 62 ist von den Vorlagerand-Tasten 46, 48, 50, 52 einstellbar. Jede Leuchtbandanzeige 60, 62 erzeugt ausserdem einen dem jeweiligen eingestellten Anzeigewert entsprechenden Digitalwert, der in die Steuer- und Logikeinrichtung 14 der Kopiermaschine abgebbar ist. Die Steuer- und Logikeinrichtung 14 tastet die Vorderkante und die Rückkante der Vorlage während ihres Vorschubes mittels des Sensors 26 ab und gibt in Abhängigkeit von den gewünschten Längen $PR_V$, $PR_H$ der vorderen und hinteren Kopienränder sowie in Abhängigkeit von den Längen $OR_V$, $OR_H$ der vorderen und hinteren Vorlagenränder Steuerimpulse zur Steuerung des Materialbahnvorschubes und einer Schneideinrichtung 10 ab, welche die Kopierblätter entsprechend der Grösse der jeweiligen Vorlage sowie der gewünschten Randlängen von einer kontinuierlichen Materialbahn 3 abschneidet.

Die Einstellung des Anzeigewertes der Leuchtbandanzeige 60 für den vorderen Vorlagenrand geschieht mittels einer ersten Vorlagerand-Taste 46, mit der sich der Anzeigewert erhöhen lässt, und einer zweiten Vorlagerand-Taste 48, mit der sich der Anzeigewert verringern lässt.

Die Leuchtbandanzeige 62 für den hinteren Vorlagerand wird ebenfalls mittels zweier Vorlagerand-Tasten 50, 52 eingestellt, wobei eine erste Vorlagerand-Taste 52 zur Erhöhung des Anzeigewertes, und eine zweite Vorlagerand-Taste 50 zur Verringerung des Anzeigewertes vorgesehen ist. Die Vorlagerand-Tasten 46, 48, 50, 52 sind als Tastenschalter ausgebildet, deren Betätigung oder Druckbeaufschlagung bewirkt, dass sich der Anzeigewert der Leuchtbandanzeigen 60, 62 während des Betätigungsintervalls kontinuierlich ändert. Zu diesem Zweck ist ein elektronischer Zähler (nicht dargestellt) vorgesehen, der während des Betätigungsintervalls der Vorlagerand-Tasten 46, 48, 50, 52 die Leuchtdioden 64 der Leuchtbandanzeigen 60, 62 sequentiell fortlaufend adressiert, wobei die jeweils aktuelle Adresse oder ein der Adresse zugeordneter Wert als ein dem eingestellten Anzeigewert der Leuchtbandanzeige 60, 62 entsprechender Digitalwert zur Verfügung gehalten wird.

Das Tastenfeld 41 enthält Zusatztasten 54, 56, 58, bei deren Betätigung vorgegebene Festwerte für die Länge $OR_V$, $OR_H$ der vorderen und hinteren Vorlagenränder zur Eingabe in die Steuer- und Logikeinrichtung verfügbar gehalten und optisch als Anzeigewert der Leuchtbandanzeigen 60, 62 angezeigt werden. Eine erste Zusatztaste 54 dient zur Eingabe der Länge für einen "beschnittenen Rand". Da die Randlängen jeweils von der Beschneidungslinie der Vorlagen aus gemessen werden, ist die Länge für den "beschnittenen Rand" gleich Null.

Eine zweite Zusatztaste 56 dient zur festen Eingabe der Länge für einen "unbeschnittenen Rand", der einprogrammierbar ist.

Eine dritte Zusatztaste 58 dient zur festen Vorgabe der Länge für einen Aufhängestreifen, um den z.B. der hintere Vorlagenrand vergrössert sein kann.

Zur Eingabe der Längen $OR_V$, $OR_H$ der vorderen und hinteren Vorlagenränder wird die vordere bzw. hintere Beschneidungskante der jeweiligen Vorlage in Deckung mit der Nullpunkt-Referenzlinie 63 der Leuchtbandanzeige 60, 62 gebracht. Anschliessend wird durch Betätigung der Vorlagerand-Tasten 46, 48 bzw. 50, 52 der Anzeigewert oder die Anzeigelänge der Leuchtbandanzeigen 60, 62 so eingestellt, dass dieser gleich der Länge des vorderen bzw. hinteren Vorlagenrandes ist. Auf diese Weise werden der vordere und der hintere Vorlagenrand mittels der Leuchtbandanzeige als Leuchtband im Maßstab 1 : 1 nachgebildet, und es wird ein dem eingestellten Anzeigewert entsprechender Digitalwert automatisch erzeugt und zur Eingabe in die Steuer- und Logikeinrichtung 14 zur Verfügung gehalten.

0157312

Unser Zeichen: M 924

Anmelder/Inh.: Meteor

Aktenzeichen: Neuanmeldung

Patentanwälte
Dipl.-Ing. Günther Eisenführ
Dipl.-Ing. Dieter K. Speiser
Dr.-Ing. Werner W. Rabus
Dipl.-Ing. Detlef Ninnemann

Datum: 20. März 1985

METEOR-SIEGEN Apparatebau Paul Schmeck GmbH
Frankfurter Strasse 27, 5900 Siegen

----------------------------------------------------------

Tastenfeld für eine Kopiermaschine

----------------------------------------------------------

A n s p r ü c h e

1. Tastenfeld für eine Kopiermaschine, welche die
Kopierblätter entsprechend der Grösse der jeweiligen
Vorlage von einer Materialbahn abschneidet, mit
Kopienrand-Tasten zur Eingabe der Länge $PR_V$, $PR_H$ der
vorderen und hinteren Kopienränder und Vorlagerand-
Tasten zur Eingabe der Länge $OR_V$, $OR_H$ der vorderen
und hinteren Vorlagenränder in eine Steuereinrichtung,
welche die Vorderkante und die Rückkante der Vorlage
während ihres Vorschubes abtastet und in Abhängigkeit
von den Längen $PR_V$, $PR_H$, $OR_V$, $OR_H$ Steuerimpulse zur
Steuerung des Materialbahn-Vorschubes und der Schneideinrichtung erzeugt,
dadurch gekennzeichnet, dass zur Eingabe der Längen
($OR_V$, $OR_H$) der Vorlagenränder je eine Leuchtbandanzeige (20, 22) vorgesehen ist, deren optischer Anzeigewert von den Vorlagerand-Tasten (6 bis 12) gleich der
Länge der Vorlagenränder einstellbar ist, und die einen
dem eingestellten Anzeigewert entsprechenden Digitalwert zur Eingabe in die Steuereinrichtung erzeugen.

WWR/kl

2. Tastenfeld nach Anspruch 1, dadurch gekennzeichnet, dass für jede Leuchtbandanzeige (20, 22) eine erste Vorlagerand-Taste (6, 12) zur Erhöhung des Anzeigewertes, und eine zweite Vorlagerand-Taste (8, 10) zur Verringerung des Anzeigewertes vorgesehen ist.

3. Tastenfeld nach Anspruch 1 oder 2, dadurch gekennzeichnet, dass die Vorlagerand-Tasten (6 bis 12) als Tastenschalter ausgebildet sind, während deren Betätigung sich der Anzeigewert der Leuchtbandanzeigen (20, 22) kontinuierlich ändert.

4. Tastenfeld nach Anspruch 3, dadurch gekennzeichnet, dass die Anzeigewerte der Leuchtbandanzeigen (20, 22) sich während der Betätigung der Tastenschalter zeitproportional ändern.

5. Tastenfeld nach einem der vorstehenden Ansprüche, dadurch gekennzeichnet, dass die Leuchtbandanzeigen (20, 22) aus einer Reihe nebeneinanderliegender diskreter Leuchtdioden (24) ausgebildet sind, die voneinander einen vorgegebenen Abstand besitzen und während der Betätigung der Tastenschalter (6 bis 12) sequentiell ausgesteuert werden.

6. Tastenfeld nach einem der vorstehenden Ansprüche, dadurch gekennzeichnet, dass Zusatztasten (14, 16, 18) vorgesehen sind, bei deren Betätigung die Leuchtbandanzeigen (20, 22) vorgegebene Festwerte für die Länge ($OR_V$, $OR_H$) der vorderen und hinteren Vorlagenränder anzeigen.

7.   Tastenfeld nach Anspruch 6, dadurch gekennzeichnet,
dass die Zusatztasten (14, 16, 18) für die Festwerte
"beschnittener Rand", "unbeschnittener Rand" und "Aufhängestreifen am hinteren Rand" der Vorlage vorgesehen
sind.

8.   Tastenfeld nach einem der vorstehenden Ansprüche,
dadurch gekennzeichnet, dass der von den Leuchtbandanzeigen (20, 22) erzeugte Digitalwert der jeweiligen
Länge zwischen Nullpunkt und Anzeigewert entspricht.

9.   Abtrennvorrichtung in einer Kopiermaschine zum Abtrennen eines Kopierblattes von einer Materialbahn in
Abhängigkeit von der Grösse einer Vorlage, mit einem
Vorschub, der mit vorgegebener Geschwindigkeit die Materialbahn an einer Abtrenneinrichtung vorbei und die
Vorlage direkt in eine Kopierstation fördert, mit einer
Steuer- und Logikschaltung, die bei vorwählbarer Relativposition zwischen den Vorderkanten bzw. den Hinterkanten
von Vorlage und dem abzutrennenden Kopierblatt Steuerimpulse an den Vorschub und die Abtrenneinrichtung zum
Start der Materialbahn bzw. zum Abtrennen des Kopierblattes liefert, wobei die Steuer- und Logikschaltung
eine Abtasteinrichtung zum Abtasten der vorderen und
hinteren Kante der Vorlage zur Erzeugung der Steuerimpulse besitzt, und mit einem Tastenfeld zur Eingabe der
Längen($OR_V$, $OR_H$) der vorderen und hinteren Vorlagenränder,
dadurch gekennzeichnet, dass das Tastenfeld (41) zur
Eingabe der Längen ($OR_V$, $OR_H$) der Vorlagenränder je
eine Leuchtbandanzeige (60, 62) enthält, deren optischer
Anzeigewert von Vorlagenrand-Tasten (46-52) gleich der
Länge der Vorlagenränder einstellbar ist, und die einen

0157312

dem eingestellten Anzeigewert entsprechenden Digitalwert zur Eingabe in die Steuer- und Logikeinrichtung (14) erzeugen.

# F i g.1

Vorschubrichtung →

hintere Kante der Kopie

hintere Beschneidungslinie

3

1    42

vordere Kante der Kopie

vordere Kante der Vorlagen

hintere Kante der Vorlage

vordere Beschneidungslinie

1a

$OR_H$    $OR_V$

$PR_H$    M    $PR_V$

0157312

# Fig.2

0157312

# Fig.3

fest eingestellte Werte
**Kopienrand**

| vorne | hinten |
| 42 | 44 |

41

**Vorlagen**

△ — 46

vorderer Rand d. Vorlage
variable Werte

▽ — 48

60

100
90
80
70
60
50
40
30
20
10
0

64

63

fest eingestellte Werte für vorderen u. hinteren Rand d.Vorlage

58 — [ ]  **56**  **54** — beschnitten

Aufhängestreifen

unbeschnitten

62

△ — 50

hinterer Rand d. Vorlage
variable Werte

▽ — 52

0
10
20
30
40
50
60
70
80
90
100

63